Europäisches Patentamt

European Patent Office

Office européen des brevets

(11) Veröffentlichungsnummer : **0 461 064 A1**

# (12) EUROPÄISCHE PATENTANMELDUNG

(21) Anmeldenummer : **91710012.5**

(22) Anmeldetag : **11.04.91**

(51) Int. Cl.$^5$ : **B25B 11/00**, B23Q 1/16

(30) Priorität : **05.06.90 DE 4017983**

(43) Veröffentlichungstag der Anmeldung :
**11.12.91 Patentblatt 91/50**

(84) Benannte Vertragsstaaten :
**BE ES FR GB IT NL**

(71) Anmelder : **DEUTSCHE AIRBUS GMBH**
**Kreetslag**
**W-2000 Hamburg (DE)**

(72) Erfinder : **Bruns, Werner**
**Bogenstrasse 30**
**W-2902 Rastede (DE)**
Erfinder : **Eickhorst, Helmut**
**Grashof 17**
**W-2930 Varel (DE)**
Erfinder : **Wilken, Enno**
**Taubenweg 8**
**W-2930 Varel 1 (DE)**

(54) **Vorrichtung zum Einrichten und Spannen von Werkstücken.**

(57) Bei dieser Vorrichtung wird ein Spannkopf 1 in einer Verstelleinrichtung angeordnet, der zwei in verschiedenen Ebenen verstellbare Elemente 3,4 umfaßt, wobei das eine Stellelement 4 mit einem Saugteil 5 verbunden ist, daß in Anlage zum Werkstück kommt und ein Vakuum das Werkstück an diesen Saugkopf heranzieht. Die Verstelleinrichtung 6 ist in der Weise ausgeführt, daß der Spannkopf in Hoch-, Längs- und Querrichtung verfahrbar ist und im Zusammenhang mit seiner Verstellmöglichkeit jede Position am zu bearbeitenden Werkstück erreichbar ist.

EP 0 461 064 A1

FIG.1

Die Erfindung bezieht sich auf eine Vorrichtung zum Einrichten und Spannen von Werkstücken nach dem Oberbegriff des Anspruchs 1.

Bei der Bearbeitung von sphärisch vorverformten, dünnwandigen Blechteilen, wie beispielsweise Beplankungsblechen von Flugzeugen, ist es erforderlich, daß die Auflagepunkte eines solchen Werkstücks während seiner Bearbeitung exakt mit der Formgebung des Werkstücks übereinstimmt, um lokale Verformungen zu vermeiden. Um dies zu erreichen, ist aus der DE-PS 31 26 720 eine in einer horizontalen Ebene angeordnete Spannvorrichtung bekannt, die einen in einem örtlich festgesetzten Fußteil gehaltenen Kopf mit einer Unterdruckeinheit umfaßt. Das Spannelement wird von einer Aufnahme in Form einer Halbkugelschale gebildet, die in einer kalottenförmigen Ausnehmung des Kopfes beweglich gelagert ist. Die Aufnahme ist mittels einer Zugfeder elastisch am Kopf gehalten. Eine derartige Ausführung einer Spannvorrichtung ist beschränkt auf eine Anordnung für in einer horizontalen Ebene zu spannende Beplankungsbleche und dergleichen, da eine Festlegung des eigentlichen Spannelements mit dem Kopf nur über die Zugfeder erfolgt.

Aufgabe der Erfindung ist es, eine Vorrichtung zum Einrichten und Spannen von großflächigen Beplankungsblechen und dergleichen zu schaffen, die auch für in einer vertikalen Ebene zu spannende Bleche verschiedener sphärischer Form einsetzbar ist und diese über eine Unterdruck-Spanneinheit sicher gehalten sind, wobei über eine Verstelleinrichtung jede Position des Spannelements zum Blech einstellbar sein soll.

Diese Aufgabe wird erfindungsgemäß durch die kennzeichnencden Merkmale des Anspruchs 1 gelöst. Weitere vorteilhafte Merkmale beinhalten die Unteransprüche.

Die mit der Erfindung hauptsächlich erzielten Vorteile bestehen darin, daß die zu bearbeitenden auch eine sphärische Form aufweisenden Beplankungsbleche und dergleichen hängend, d.h. vertikal zu transportieren sind und über die Vorrichtung zur vertikalen Bearbeitung aufgespannt werden können.

Hierzu dient im wesentlichen ein in eine Verstellrichtung integrierter Spannkopf, bestehend aus zwei Verstellelenenten, die zueinander auf kreisbogenförmigen Führungsbahnen an die sphärische Form des Beplankungsblechs anpaßbar sind.

Mit dem einen Verstellelement ist ein dem Beplankungsblech zugerichtetes Saugelement verbunden, in dem eine Ventileinrichtung für den Unterdruck angeordnet ist. Diese Ventileinheit ermöglicht, daß erst bei einer richtig positionierten Auflage des Beplankungsblechs zum Spannkopf ein Unterdruck gegenüber dem Blech zum Spannen erzeugt und keine "Falschluft" angesogen wird.

Damit die Spannköpfe in nahezu gleichmäßigen Abständen über die Fläche des Beplankungsblechs verteilt angeordnet werden können, sind diese in der Verstelleinrichtung gehalten. Diese umfaßt im wesentlichen die Spannköpfe aufnehmende und in Quer- und Hochrichtung verschiebbar Arme, die wiederum in vertikalen Säulen der Einrichtung abgestützt sind, die in Längsrichtung verschiebbar in einem Gestell der Einrichtung gehalten werden.

Durch diese örtlich anzupassende Positionierung der Spannköpfe über die Verstelleinrichtung und durch die an die sphärische Form des Beplankungsblechs angestellte Neigung des Spannkopfes wird eine optimale Anlage erzielt, die zu einer sicheren Bearbeitung, wie Bohren, Fräsen, Maskenschneiden mit Laser und Lackieren führt.

Die Verstellbewegungen der Spannköpfe in der Einrichtung sind manuell als auch motorisch durchführbar, wobei eine Positionsanzeige visuell oder über elektrische Wegmeßsysteme erfolgen kann. Einstellungen können auch über ein Programm vorgenommen werden.

Zur Abstützung des Spannkopfes gegen ein Umkippen sind bei einer Verwendung für in einer horizontalen Ebene angeordnete Beplankungsbleche das Saugelement durchdringende Haltedrähte vorgesehen, die endseitig örtlich festgelegt werden. Diese Haltedrähte weisen einen geringen Durchmesser und eine große Flexibilität auf, so daß eine Behinderung in der Anpassung des Spannkopfes an das Werkstück ausgeschlossen ist.

Ein Ausführungsbeispiel der Erfindung ist in der Zeichnunq dargestellt und wird im folgenden näher beschrieben. Es zeigen:

Fig. 1 eine Seitenansicht einer horizontal angeordneten Spannvorrichtung, bestehend im wesentlichen aus einem Spannkopf mit einem Grundkörper und zwei Verstellelementen mit Saugelement teilweise im Schnitt,

Fig. 2 eine Draufsicht eines Spannkopfes gemäß Fig. 1,

Fig. 3 einen Grundkörper des Spannkopfes in einer Ansicht gemäß Fig. 1 teilweise im Schnitt,

Fig. 4 eine Ansicht in Pfeilrichtung X auf den Grundkörper gemäß Fig. 3 gesehen,

Fig. 5 eine Draufsicht des Grundkörpers gemäß Fig. 3,

Fig. 6 ein erstes Verstellelement des Spannkopfes in der Ansicht gemäß Fig. 2 gesehen,

Fig. 7 eine Ansicht auf den Grundkörper in Pfeilrichtung Z der Fig. 6 gesehen,

Fig. 8 eine Draufsicht zu Fig. 6,

Fig. 9 eine Seitenansicht des zweiten Verstellelements,

Fig. 10 eine Ansicht des zweiten Verstellelements in Pfeilrichtung Y der Fig. 9 und

Fig. 11 eine Seitenansicht der Verstelleinrichtung mit integrierten Spannköpfen und Lagerungen.

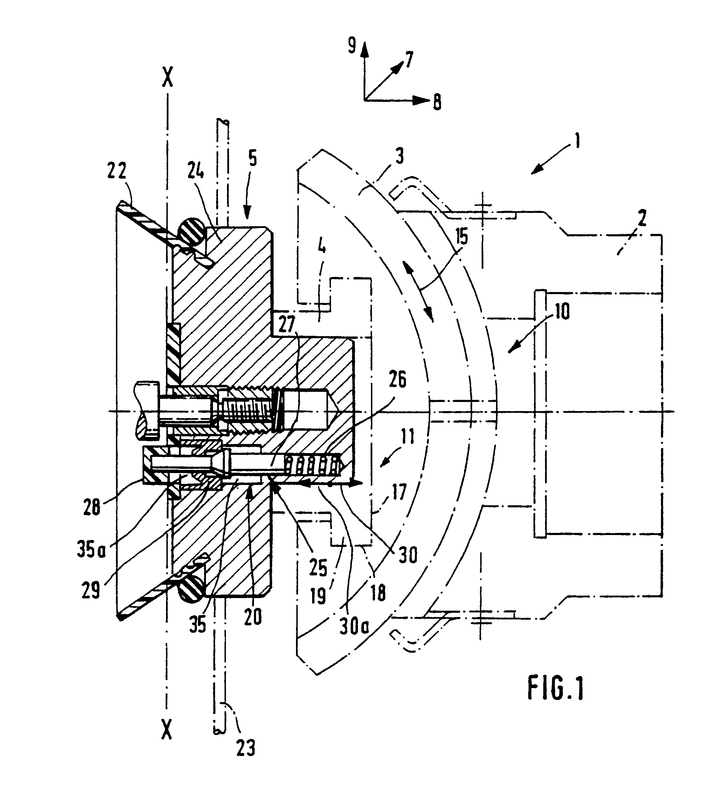

In Fig. 1 ist ein Spannkopf 1 dargestellt, der einen Grundkörper 2 sowie zwei Verstellelemente 3 und 4 und ein Saugelement 5 umfaßt. Der Grundkörper 2 ist mit einer Verstelleinrichtung 6 so verbunden, daß eine Einstellung des Spannkopfes 1 in Pfeilrichtungen 7, 8 und 9, d.h. in Längs-, Quer- und Hochrichtung möglich ist.

Die Verstellelemente 3 und 4 des Spannkopfes 1 sind auf kreisbogenförmigen Flachführungen 10 und 11 derart zueinander bewegbar angeordnet, daß jede Einstellung zur sphärischen Form eines Beplankungsblechs möglich ist.

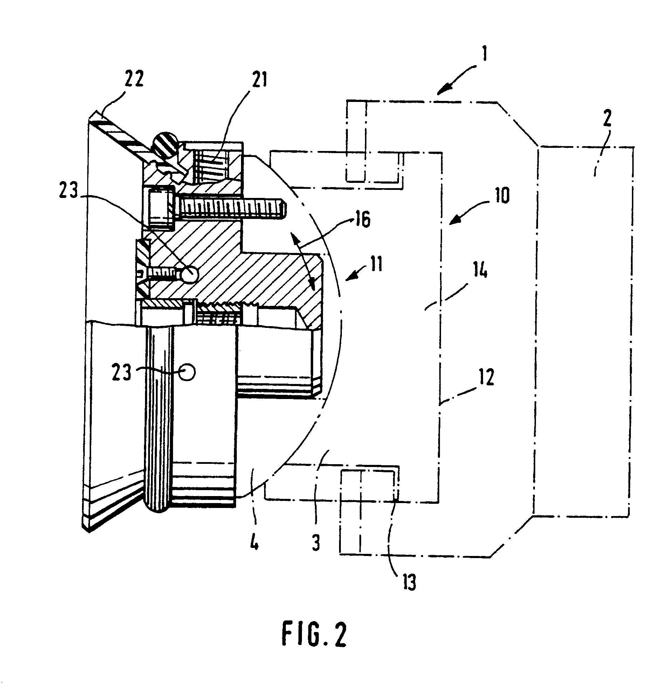

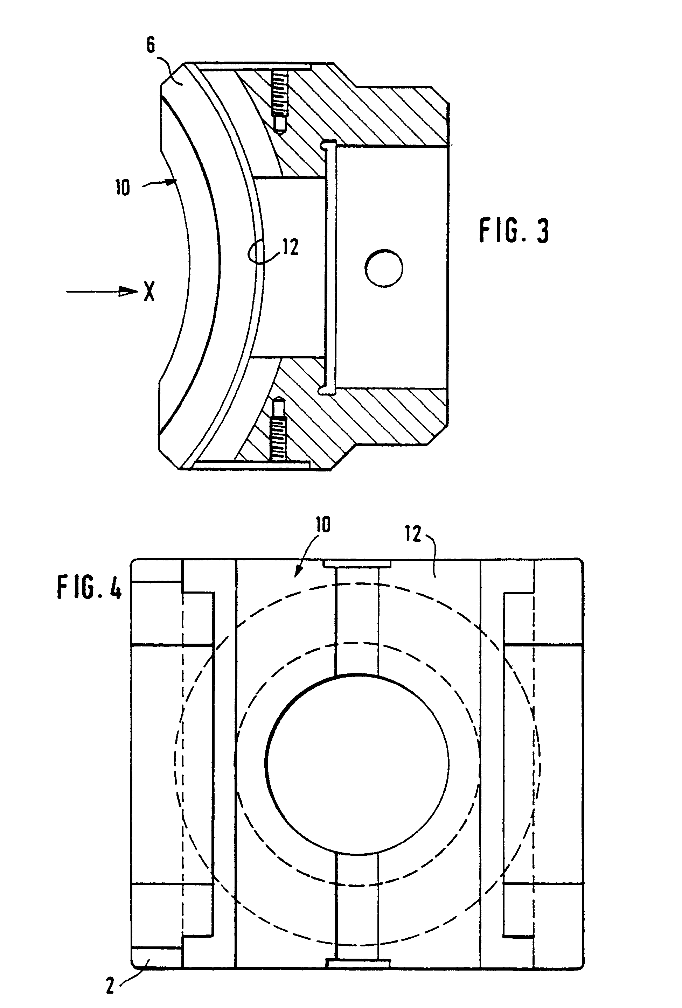

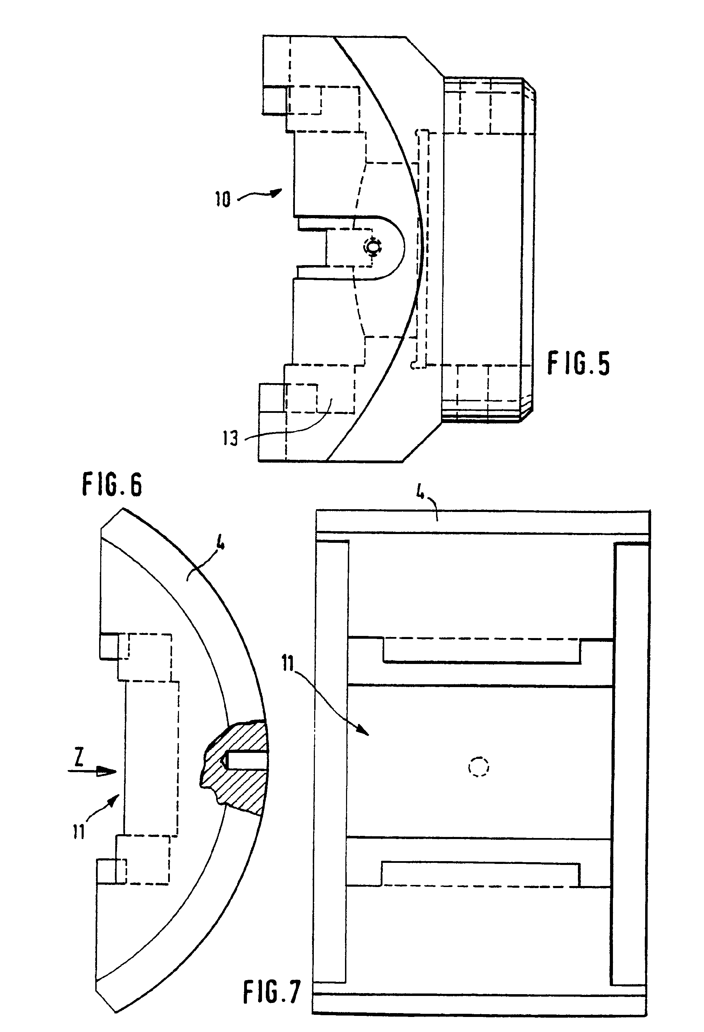

Der Grundkörper 2 weist hierzu, wie in Figuren 2 und 3 bis 5 näher dargestellt ist, die Flachführung 10 auf, die eine konkav verlaufende kreisbogenförmige Nut 12 mit hinterschnittenen Abschnitten 13 umfaßt. In diese Nut 12 greift eine Leiste 14 des ersten Verstellelements 3 ein, die ebenfalls einen entsprechend konkav kreisbogenförmigen Verlauf aufweist und eine Schwenkbewegung des ersten Verstellelements 3 im Grundkörper 2 in den Pfeilrichtungen 15 bewirkt (Fig. 1).

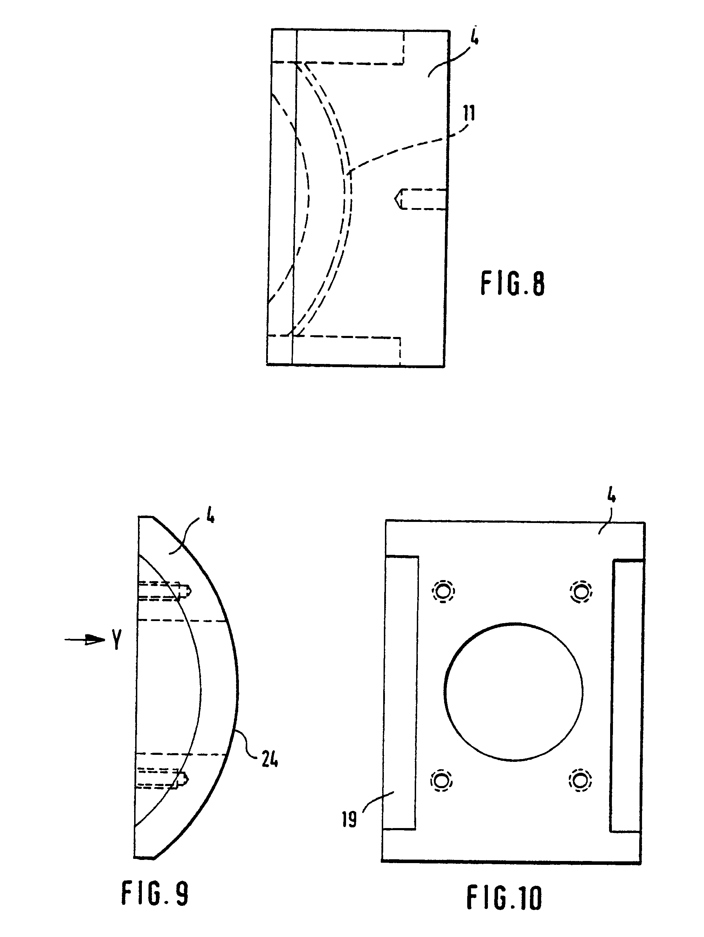

Das zweite Verstellelement 4 ist in den Figuren 1 und 6 bis 8 näher dargestellt und wird im ersten Verstellelement 3 ebenfalls in einer konkav kreisbogenförmigen Flachführung 11 verschiebbar gehalten. Diese Flachführungen 10 und 11 sind unter einem Winkel von 90° zueinander über Kreuz angeordnet, so daß das zweite Verstellelement 4 im ersten Verstellelement 3 in die Pfeilrichtungen 16 verschwenkbar ist (Fig. 2).

Die Flachführung 11 des ersten Verstellelements 3 weist eine Nut 17 mit hinterschnittenen Abschnitten 18 auf, in die eine Leiste 19 des zweiten Verstellelements 4 eingreift. Mit diesem Element 4 ist das eigentliche Saugelement 5 verbunden. Dies nimmt die Ventileinrichtung 20, den entsprechenden Zuführkanal 21 für den Unterdruck und eine Dichtstulpe 22 auf.

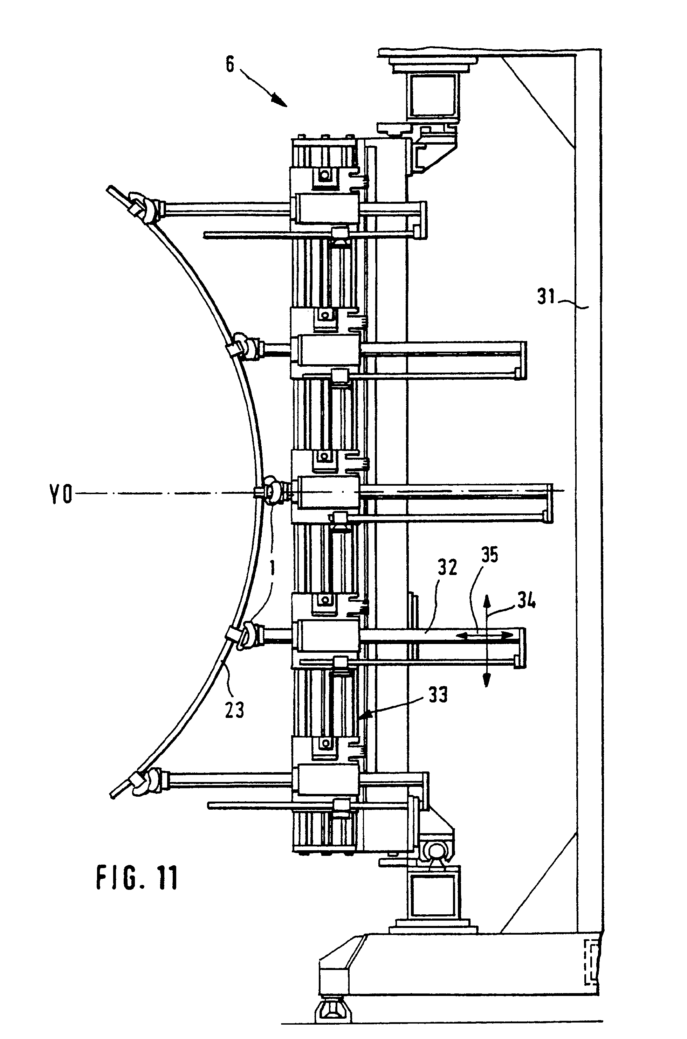

In den Fig. 1 und 2 ist der Spannkopf 1 in einer horizontalen Ebene: angestellt gezeichnet. Diese Anordnung des Kopfes 1 dient zum Spannen von Blechen in einer vertikalen Ebene. Bei einer Anstellung des Spannkopfes 1 in einer horizontalen Ebene, wird die Verstelleinrichtung 6 (Fig. 11), in der die Spannköpfe gehalten sind, entsprechend um 90° verdreht. In dieser horizontalen Spannstellung der Bleche - in der die Spannköpfe 1 vertikal stehen - werden zur Vermeidung eines unkontrollierten Abkippens der Köpfe 1 Haltedrähte 23 verwendet, die den Tragkörper 24 des Saugelements 5 durchdringen und örtlich festgesetzt sind.

Am Tragkörper 24 ist die Ventileinrichtung 20 angeordnet, die ein Kugelventil 25 umfaßt, das in einer Schließstellung von einer Feder 26 belastet ist. Mit dem Schaft 27 des Ventils 25 ist endseitig ein Tastkörper 28 verbunden, der in der Schließstellung des Ventils 25 über die Spannebene X-X des Werkstücks herausragt und das Ventil 25 über seinen Ventilsitzring 29 luftdicht geschlossen hält. Bei einem Verschieben des Ventils 25 über den Tastkopf 28 bei einer Anlage des Blechs wird sich das Ventil 25 entgegen der Spannung der Feder 26 in Pfeilrichtung 30 bewegen und über die Leitung 21 die zu einer Pumpe führt, kann ein Vakuum zwischen Blech und Dichtstulpe 22 hergestellt und das Werkstück zum Bearbeiten festgesetzt werden. Bei einem Ausschalten der Pumpe wird sich das Ventil in Pfeilrichtung 30a in eine Schließstellung bewegen, wobei der Tastkopf 28 die Bohrung 35a im Tragkörper 24 verläßt.

Die Verstelleinrichtung 6 gemäß Fig. 1 ist in einem Gestell 31 gehalten und umfaßt Tragarme 32 für die Spannköpfe 1. Diese sind in vertikalen Stützen 33 gehalten und in Hochrichtung 34 und in Querrichtung 35 verstellbar. Desweiteren sind die vertikalen Stützen 33 in den Tragarmen 32 in Längsrichtung im Gestell 31 verfahrbar, so daß mit dieser Verstellmimik im Zusammenhang mit der Verstellmöglichkeit der Spannköpfe 1 jede mögliche Position am zu bearbeitenden Blech 36 erreichbar ist.

## Claims

1. Vorrichtung zum Einrichten und Spannen von Werkstücken, insbesondere von großflächigen Werkstücken geringer Wandstärke, bei der das zu bearbeitende Werkstück durch Unterdruck-Spanneinheiten gehalten wird, die jeweils einen auf einer Grundplatte befestigten Spannkopf mit einem Saugelement umfassen, der schwenkbeweglich zum Grundkörper gelagert ist und eine Unterdruckeinheit mit einer Ventileinrichtung aufweist, dadurch gekennzeichnet, daß der Spannkopf (1) zwei Verstellelemente (3,4) umfaßt, die auf kreisbogenförmigen Flachführungen (10,11) bewegbar zueinander gelagert sind, wobei das erste Verstellelement (3) in einer Führungsbahn (Nut 12) des Grundkörpers (2) und das zweite Verstellelement (4) in einer weiteren Führungsbahn (Nut 17) des ersten Verstellelements (3) verschiebbar angeordnet ist und diese Führungsbahnen (12,17) gekreuzt und unter einem Winkel von 90° zueinander verlaufen.

2. Vorrichtung nach Anspruch 1, dadurch gekennzeichnet, daß das erste Verstellelement (3) im Grundkörper (2) über die Flachführung (10) verschiebbar gehalten ist, die im Grundkörper (2) eine konkav, kreisbogenförmig verlaufende Nut (12) mit hinterschnittenen Abschnitten (13) umfaßt, in der eine entsprechend kreisbogenförmig ausgebildete Leiste (14) des ersten Verstellelements (3) korrespondierend angeordnet ist.

3. Vorrichtung nach Anspruch 1 oder 2, dadurch gekennzeichnet, daß das zweite Verstellelement (4) im ersten Verstellelement (3) über die weitere Flachführung (11) verschiebbar gehalten ist, welche im ersten Verstellelement (3) eine konkav kreisbogenförmig verlaufende Nut (17) mit hinterschnittenen Abschnitten (18) umfaßt, in der eine entsprechend kreisbogenförmig ausgebildete Leiste (19) des zweiten Verstellelements (4) korrespondierend angeordnet ist.

4. Vorrichtung nach einem der Ansprüche 1 bis 3, dadurch gekennzeichnet, daß das Saugelement (5) im rechten Winkel zu seiner Längsachse (Lo) angeordnete Haltedrähte (23) umfaßt, die einen relativ kleinren Durchmesser aufweisen und einen Tragkörper (24) des Saugelements (5) durchdringen und endseitig zum Halten des Spannkopfes (1) jeweils örtlich festgelegt sind.

5. Vorrichtung nach einem der Ansprüche 1 bis 4, dadurch gekennzeichnet, daß die Haltedrähte (23) zu beiden Seiten der Längsachse (Lo) eines vertikal angeordneten Saugelements (5) etwa horizontal oder parallel zueinander verlaufend angeordnet sind.

6. Vorrichtung nach einem der Ansprüche 1 bis 5, dadurch gekennzeichnet, daß im Tragkörper (24) des Saugelements (5) die Ventileinrichtung (20) angeordnet ist, die ein einen Vakuum-Saugkanal (35) abschließendes und über eine Feder (26) beaufschlagtes Kegelventil (25) umfaßt, das in Abhängigkeit von der Lage des zu haltenden Werkstücks auf dem Saugelement (5) von einer Schließstellung in Pfeilrichtung (30a) in eine Vakuum-Öffnungsstellung in Pfeilrichtung (30) verschiebbar ist.

7. Vorrichtung nach Anspruch 6, dadurch gekennzeichnet, daß das Kegelventil (25) am freien der Feder (26) abgekehrten Ende einen Tastkopf (28) aufweist, der in der Schließstellung über eine Spannebene (X-X) des Werkstücks vorragt und in einer Spannstellung des Werkstücks bis auf eine mechanische Anschlagebene bei gleichzeitiger Öffnung des Ventils (20) in eine Bohrung (35a) des Tragkörpers (24) eintaucht.

8. Vorrichtung nach einem der Ansprüche 1 bis 7, dadurch gekennzeichnet, daß die Spannköpfe (1) in Hoch- und Querrichtung (34,35) sowie in Längsrichtung verschiebbar in einer Verstelleinrichtung (6) gehalten sind.

9. Vorrichtung nach einem der Ansprüche 1 bis 8, dadurch gekennzeichnet, daß die Verstelleinrichtung (6) jeweils einen den Spannkopf (1) aufnehmenden Tragarm (32) umfaßt, der in einer horizontalen Ebene angeordnet ist und sich an einer vertikalen Säule (33) eines Gestells (31) abstützt.

10. Vorrichtung nach einem der Ansprüche 1 bis 9, dadurch gekennzeichnet, daß die vertikale Säule (33) in Längsrichtung der Verstelleinrichtung (6) im Gestell (31) verfahrbar angeordnet ist.

11. nach einem der Ansprüche 1 bis 10, dadurch gekennzeichnet, daß die Verfahrbewegungen des Spannkopfes (1) im Gestellt (31) motorisch erfolgt und die Positionen über elektronische Wegmeßsysteme erfaßbar sind.

FIG.1

FIG. 2

FIG. 3

FIG. 4

FIG.5

FIG.6

FIG.7

FIG.8

FIG.9

FIG.10

FIG. 11

**Europäisches Patentamt**

# EUROPÄISCHER RECHERCHENBERICHT

Nummer der Anmeldung

EP 91 71 0012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-8 713 953 (PREH GmbH) <br> * Zusammenfassung; Figur 1 * <br> --- | 1-3,6-11 | B 25 B 11/00 <br> B 23 Q 1/16 |
| Y | US-A-3 273 879 (O. FLOREN) <br> * Anspruch 1; Figuren 1-4 * <br> --- | 1-3,6,7 | |
| Y | EP-A-0 277 423 (GEMCOR ENG. CORP.) <br> * Seite 6, Zeile 48 - Seite 7, Zeile 32; Figuren 4,5 * | 8 | |
| A | | 9-11 | |
| Y | --- <br> GB-A-2 205 258 (JOBS S.p.A.) <br> * Seite 5, Zeilen 11-18; Figuren 2,4 * <br> ----- | 9-11 | |

| RECHERCHIERTE SACHGEBIETE (Int. Cl.5) |
|---|
| B 23 Q <br> B 25 B |

Der vorliegende Recherchenbericht wurde für alle Patentansprüche erstellt

| Recherchenort | Abschlußdatum der Recherche | Prüfer |
|---|---|---|
| DEN HAAG | 06-09-1991 | VIBERG S.O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)